# EUROPÄISCHE PATENTSCHRIFT

(11) **EP 4 103 354 B1**
(45) Veröffentlichungstag und Bekanntmachung des Hinweises auf die Patenterteilung: **03.01.2024**
(21) Anmeldenummer: 21705875.9
(22) Anmeldetag: 05.02.2021
(51) Int. Cl.: B23Q 7/02, B23Q 7/04, B65G 29/02

(54) **HANDHABUNGSVORRICHTUNG**
HANDLING DEVICE
DISPOSITIF DE MANIPULATION

(30) Priorität: 11.02.2020 DE 102020103411
(43) Veröffentlichungstag der Anmeldung: 21.12.2022
(73) Patentinhaber: Schaeffler Technologies AG & Co. KG, 91074 Herzogenaurach (DE)
(72) Erfinder: VOLK, Wolfgang, 96158 Frensdorf (DE); SATTLER, Klaus, 91456 Diespeck (DE)
(86) Internationale Anmeldenummer: PCT/DE2021/100112
(87) Internationale Veröffentlichungsnummer: WO 2021/160214

(56) Entgegenhaltungen:
- EP-A2- 0 453 710
- DE-A1-102010 021 983

## Beschreibung

Die Erfindung betrifft eine Handhabungsvorrichtung zur Übergabe von Werkstücken.

Ferner betrifft die Erfindung ein Verfahren zur Übergabe von Werkstücken.

Aus den Dokumenten DE 10 2006 018 590 A1 und DE 10 2007 050 905 B4 sind verschiedene Handhabungsvorrichtungen bekannt, welche zur Handhabung von Teilen innerhalb einer Fertigungsanlage nutzbar sind. In beiden Fällen ist eine Plattform, auf welcher Gegenstände ablegbar und verlagerbar sind, in jedem Betriebszustand der betreffenden Handhabungsvorrichtung horizontal angeordnet.

Die DE 40 39 046 A1 offenbart ein modulares, mehrachsiges und mobiles System für Handhabung und Bearbeitung, welches als fertigungstechnische Alternative zu Rundschalttischen gedacht ist und einen sogenannten Revolverkopf umfasst, der mit Hilfe eines Winkeltriebs bewegbar ist.

Ein Rundschalttisch-Bearbeitungszentrum ist beispielsweise in der DE 87 14 508 U1 beschrieben. Der Rundschalttisch dieses Bearbeitungszentrums trägt auf seinem Umfang mehrere in gleichem Winkelabstand angeordnete Werkstück-Spanneinheiten. Den Werkstück-Spanneinheiten sind Spindeleinheiten zugeordnet, wobei zumindest eine der Spindeleinheiten in drei Achsen verschiebbar ist.

Aus der DE 37 23 822 A1 ist eine Mitnehmer-Spannvorrichtung für die Bearbeitung von Zylinderrohren auf Nutenziehmaschinen mit einem Rundschalttisch bekannt, hierbei ist auf einem höhenverstellbaren Drehteller eine Spannvorrichtung mit mehreren um die Drehachse verteilten Spannschiebern angeordnet. Die Enden der Spannschieber laufen gegen einen konisch ausgedrehten, ortsfest an einem Maschinengestell gehalterten Spannring an. Aus der EP 0 453 710 A2 ist eine Handhabungsvorrichtung nach dem Oberbegriff des Anspruchs 1 bekannt.

Der Erfindung liegt die Aufgabe zugrunde, gegenüber dem Stand der Technik weiterentwickelte Möglichkeiten der Handhabung von Werkstücken anzugeben, wobei die Werkstücke während der Übergabe ihre Orientierung, insbesondere von einer horizontalen Ausrichtung zu einer vertikalen Ausrichtung, ändern.

Diese Aufgabe wird erfindungsgemäß gelöst durch eine Handhabungsvorrichtung mit den Merkmalen des Anspruchs 1. Ebenso wird die Aufgabe gelöst durch ein Verfahren zur Übergabe von Werkstücken gemäß Anspruch 8. Im Folgenden im Zusammenhang mit dem Übergabeverfahren erläuterte Ausgestaltungen und Vorteile der Erfindung gelten sinngemäß auch für die Handhabungsvorrichtung und umgekehrt.

Die Handhabungsvorrichtung umfasst einen Werkstückträger, welcher zur Aufnahme einer Mehrzahl von Werkstücken ausgebildet ist, sowie eine rotierbare, getaktet betreibbare Werkstückfördereinrichtung, welche zur Weitergabe der Werkstücke an eine Ablagestation ausgebildet ist. Die Werkstückfördereinrichtung ist dazu ausgebildet, Werkstücke in einer ersten Winkellage vom Werkstückträger aufzunehmen und in einer zweiten Winkellage an die Ablagestation weiterzugeben und umfasst mindestens zwei linear verschiebbare Vorschubelemente.

Die geometrischen Verschiebeachsen der Vorschubelemente kreuzen sich in der Rotationsachse der Werkstückfördereinrichtung. Mehrere dieser Vorschubelemente, insbesondere alle Vorschubelemente, sind gleichzeitig bewegbar, wobei den einzelnen Vorschubelementen zu diesem Zweck jeweils ein ortsfester, nicht mit der Werkstückfördereinrichtung rotierender Linearaktuator zugeordnet ist. Jedes Vorschubelement weist zwei gleichartige Endstücke auf, wobei jedes Endstück je nach Winkelstellung der Werkstückfördereinrichtung zur direkten Zusammenwirkung mit einem Werkstück oder zur direkten Zusammenwirkung einem Linearaktuator vorgesehen ist.

Dies bedeutet, dass bei einer vollen Umdrehung der Werkstückfördereinrichtung jedes Endstück mindestens ein einziges Mal, vorzugsweise mehrfach, die Funktion eines Greifer-Endes, welches einem Werkstück zugewandt ist, und zusätzlich mindestens einmal, vorzugsweise ebenfalls mehrere Male, die Funktion eines Aktuator-Endes, welches einem Linearaktuator zugewandt ist, hat. Die Endstücke der Vorschubelemente werden auch als Produktgreifer bezeichnet.

Insbesondere haben die beiden Enden eines jeden Vorschubelementes bei der Weitertaktung der Werkstückfördereinrichtung zweimal hintereinander die Funktion eines Greifer-Endes, was bedeutet, dass damit ein Werkstück erst gegriffen oder dann abgegeben wird, und im Anschluss hieran zweimal hintereinander die Funktion eines Aktuator-Endes, welches dabei jeweils Linearaktuator zugewandt ist, der das betreffende Vorschubelement verschiebt. Von den Verschiebeachsen der Vorschubelemente wird in typischer Ausgestaltung eine Ebene aufgespannt, zu welcher die Rotationsachse der Werkstückfördereinrichtung eine Flächennormale darstellt.

In bevorzugter Ausgestaltung ist die Rotationsachse der Werkstückfördereinrichtung, welche zumindest Grundmerkmale eines Drehtisches, insbesondere Rundschalttisches, übernimmt, horizontal ausgerichtet. Die Anzahl der Vorschubelemente, welche der Werkstückfördereinrichtung zuzurechnen sind, unterliegt keinen prinzipiellen Beschränkungen. In typischer Ausgestaltung umfasst die Werkstückfördereinrichtung genau zwei, sich rechtwinklig kreuzende Vorschubelemente. Die Vorschubelemente sind unabhängig von deren Anzahl derart gestaltet, dass sich die geometrischen Vorschubachsen in einem auf der Rotationsachse der Werkstückfördereinrichtung liegenden Punkt schneiden. Dies ist durch Kröpfung mindestens eines Vorschubelements erreichbar. Ein weiteres Vorschubelement weist dagegen eine durchgehend gerade Form auf. Um die Verschiebbarkeit sämtlicher Vorschubelemente zu ermöglichen, kann eines der Vorschubelemente statt einer Kröpfung beispielsweise auch eine Aussparung in Form eines Langlochs aufweisen.

Unabhängig davon, ob ein einzelnes Vorschubelement eine Kröpfung oder Aussparung aufweist, sind die beiden Enden eines jeden Vorschubelements, das heißt die Endstücke, welche je nach Betriebszustand als Greifer-Ende oder als Aktuator-Ende fungieren, optional austauschbar, um eine Anpassung an unterschiedliche Werkstücke zu ermöglichen. Bei den zu fördernden Werkstücken handelt sich beispielsweise um Komponenten von Ventiltrieben für Verbrennungsmotoren, beispielsweise hydraulische Abstützelemente. In diesem Zusammenhang wird beispielhaft auf die Dokumente DE 10 2017 117 946 B3 und EP 2 010 758 B1 hingewiesen.

Die Greifer der Vorschubelemente sind vorzugsweise als pneumatische Greifer, nämlich Vakuumgreifer, ausgebildet. Vakuumgreifer sind aus verschiedensten technischen Gebieten prinzipiell bekannt, wobei beispielhaft die DE 196 25 846 A1 genannt wird. Im vorliegenden Fall stellen die Vakuumgreifer, welche sich an beweglichen Elementen, nämlich den Vorschubelementen, befinden, fliegende Vakuumgreifer dar. Die Luftdurchführung zu dem Vakuumgreifern ist als drehende Luftdurchführung durch die Werkstückfördereinrichtung, das heißt den Rundschalttisch, gestaltet.

Zur Führung der Vorschubelemente sind vorzugsweise mehrere, gleichförmig am Umfang der Werkstückfördereinrichtung verteilte Linearführungen vorgesehen. In besonders vorteilhafter Ausgestaltung, welche eine sehr hohe geometrische Präzision ermöglicht, sind Führungselemente, die der linearen Führung der Vorschubelemente dienen, einstückig mit einer drehbaren runden Platte, das heißt dem Drehtisch im engeren Sinne, ausgebildet. Hierbei können die einzelnen Linearführungen, welche in diesem Fall als Gleitlagerungen ausgebildet sind, als Bohrungen gestaltet sein, durch welche die im Wesentlichen stabförmigen Vorschubelemente gesteckt sind. Alternativ ist eine Lagerung der Vorschubelemente durch Linearwälzlager möglich.

Auch hinsichtlich der Lagerung des Rundschalttisches kommen verschiedene, grundsätzlich bekannte technische Prinzipien, insbesondere eine Wälzlagerung, in Betracht. Der Antrieb des Rundschalttisches kann entweder als Direktantrieb, das heißt getriebelos, oder über ein Getriebe erfolgen. Einrichtungen zur Erfassung der Winkelstellung des Rundschalttisches können am Rundschalttisch selbst und/oder an dessen Antriebsvorrichtung vorgesehen sein. Zusammen mit der exakten Führung der Vorschubelemente ist insgesamt eine hohe Positioniergenauigkeit der Handhabungsvorrichtung erzielbar.

Die Linearaktuatoren, welche der Verschiebung der Vorschubelemente dienen, sind vorzugsweise ausschließlich zur Ausübung von Druckkräften, das heißt zur Verschiebung in nur einer Richtung, ausgebildet. Die Verschiebung in die Gegenrichtung, das heißt der Rückhub der Vorschubelemente, erfolgt vorzugsweise mit Hilfe von Federn. Zu diesem Zweck sind insbesondere Schraubenfedern geeignet, welche sich beispielsweise an Elementen der Linearführungen abstützen, wobei jedes Vorschubelement von zwei Schraubenfedern umgeben ist und ebenfalls Abstützungen für die Federn bereitstellt oder mit solchen Abstützungen fest verbunden ist.

Als Werkstückträger, welcher dem Rundschalttisch Teile zuführt, ist besonders ein Drehtisch geeignet. Bei dem Drehtisch handelt es sich in einem einfachen Fall um eine drehende Platte, in welcher sich mehrere Ausnehmungen befinden, die jeweils zu Aufnahme eines Werkstücks vorgesehen sind. Die Anzahl der Ausnehmungen entspricht vorzugsweise einem Mehrfachen der Anzahl der Vorschubelemente. Beispielsweise befinden sich im Werkstückträger acht oder zwölf Aufnahmen für jeweils ein Werkstück. Im Fall von zwei Vorschubelementen bedeutet dies, dass ein Weiterdrehen der Werkstückfördereinrichtung um 90°, das heißt eine Weiterschaltung um einen Takt, mit einer Weiterdrehung des Werkstückträgers um 45° beziehungsweise um 30° einhergeht.

Das mit dem Rundschalttisch durchführbare Handhabungsverfahren umfasst unabhängig von der Gestaltung des Werkstückträgers folgende Schritte:
- Bereitstellung einer als Rundschalttisch mit horizontaler Rotationsachse ausgebildeten Werkstückfördereinrichtung mit zwei linear verschiebbaren, sich in der Rotationsachse kreuzenden Vorschubelementen,
- Gleichzeitiges Abnehmen eines sich in einer ersten Winkellage befindlichen ersten Werkstücks vom Werkstückträger durch das erste Vorschubelement und Weitergabe eines gleichartigen, sich in einer um 90° gekippten Winkellage befindlichen Werkstücks durch das zweite Vorschubelement an eine Ablagestation,
- Weiterdrehung des Rundschalttisches um 90° und Aufnahme eines weiteren Werkstücks vom Werkstückträger durch das zweite Vorschubelement bei gleichzeitiger Weitergabe des im vorherigen Schritt aufgenommenen ersten Werkstücks durch das erste Vorschubelement an die Ablagestation.

Die Aktuatoren, welche außerhalb des Rundschalttisches ortsfest angeordnet sind und die Vorschubelemente, welche in entsprechender Anzahl vorhanden sind, verschieben, weisen nicht notwendigerweise einen einheitlichen Hub auf. Im Fall von genau zwei Vorschubelementen führt vorzugsweise einer der Aktuatoren stets einen horizontalen Hub und der andere Aktuator stets einen vertikalen Hub aus, wobei durch den vertikalen Hub ein Werkstück von dem Werkstückträger aufgenommen und durch den horizontalen Hub simultan ein Werkstück von der Werkstückfördereinrichtung an eine nachgelagerte Einrichtung, welcher der Ablagestation zuzurechnen ist, übergeben wird.

Eine hohe Taktzahl der Handhabungsvorrichtung ist insbesondere dadurch erreichbar, dass mehrere, zu fördernde und hierbei zu kippende Werkstücke gleichzeitig durch die Werkstückfördereinrichtung vom Werkstückträger aufgenommen und an die Ablagestation weitergegeben werden. Insbesondere ist die Handhabungsvorrichtung auf eine Übergabe von mehr als 60 Teilen pro Minute ausgelegt. Zum Beispiel wird eine Taktung von 70/min erreicht, indem insgesamt 140 Mal pro Minute ein Werkstück aufgenommen oder weitergegeben wird, wobei die Anzahl von 70 Takten genau 17,5 Umdrehungen des Rundschalttisches entspricht.

Nachfolgend wird ein Ausführungsbeispiel der Erfindung anhand einer Zeichnung näher erläutert. Hierin zeigen, teils grob schematisiert:
- Fig. 1: eine Handhabungsvorrichtung in Frontansicht,
- Fig. 2: die Handhabungsvorrichtung in Draufsicht,
- Fig. 3: eine Werkstückfördereinrichtung der Handhabungsvorrichtung in seitlicher Ansicht,
- Fig. 4 und 5: Details der Handhabungsvorrichtung.

Eine insgesamt mit dem Bezugszeichen 1 gekennzeichnete Handhabungsvorrichtung ist dazu vorgesehen, auf einem Werkstückträger 2 angeordnete Werkstücke 3 mit Hilfe einer Werkstückfördereinrichtung 5 an eine Ablagestation 20 einer Maschine 19, welche nicht der Handhabungsvorrichtung 1 zuzurechnen ist, zu übergeben. Der Werkstückträger 2 hat im Ausführungsbeispiel die Form einer horizontal angeordneten drehbaren Scheibe, in welcher sich Aufnahmen 4 zum Einlegen der Werkstücke 3 befinden. Die im Ausführungsbeispiel vertikal ausgerichtete Rotationsachse des Werkstückträgers 2 ist mit RW bezeichnet. In alternativer, nicht dargestellter Ausgestaltung kann der Werkstückträger 2 beispielsweise als Förderband ausgeführt sein, welches der Werkstückfördereinrichtung 5 Werkstücke 3 zuführt.

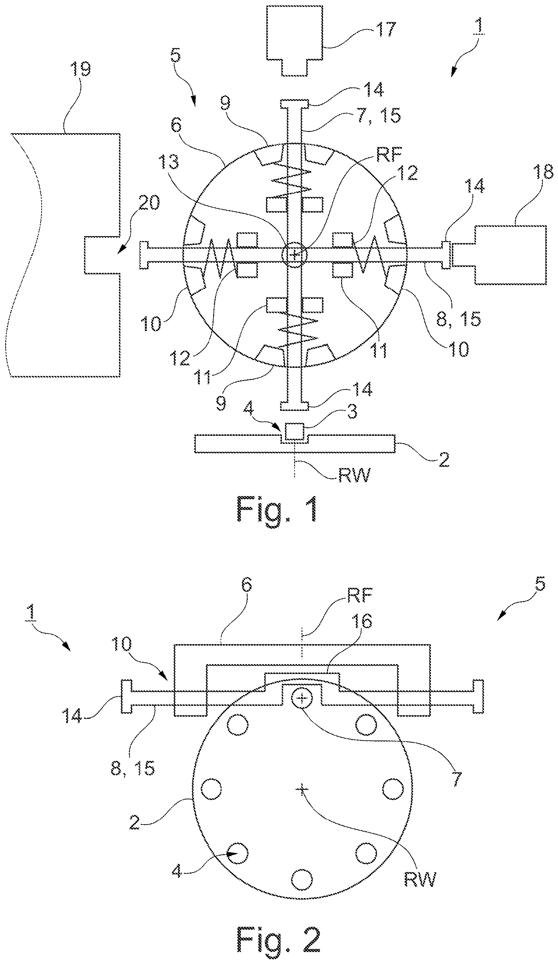

Die Werkstücke 3 befinden sich im Werkstückträger 2 in horizontaler Ausrichtung. Die Werkstückfördereinrichtung 5 umfasst einen Drehtisch 6, welcher vertikal ausgerichtet ist. Die dementsprechend horizontal ausgerichtete Rotationsachse der Werkstückfördereinrichtung 5 ist mit RF bezeichnet. Ferner sind der Werkstückfördereinrichtung 5 zwei Vorschubelemente 7, 8 zuzurechnen, welche sich in Frontansicht (Figur 1) X-förmig schneiden, wobei zwischen den Vorschubelementen 7, 8 rechte Winkel eingeschlossen sind. Das erste Vorschubelement 7 ist durchgängig gerade, wogegen das zweite Vorschubelement 8 ein gekröpftes Element darstellt.

Linearführungen 9, 10 am Drehtisch 6 sind zur Führung der Vorschubelemente 7, 8 vorgesehen. Beide Vorschubelemente 7, 8 sind mit jeweils zwei Abstützringen 11 fest verbunden, an denen sich Federn 12, nämlich als Schraubenfedern ausgebildete Druckfedern, abstützen. Das zweite Ende einer jeden Feder 12 stützt sich am Drehtisch 6 ab. Eine den Drehtisch 6 antreibende Welle ist mit 13 bezeichnet.

Zur Verschiebung der Vorschubelemente 7, 8 gegen die Kraft einzelner Federn 12 sind Aktuatoren 17, 18 vorgesehen. Die Aktuatoren 17, 18 sind ortsfest positioniert. Beide Aktuatoren 17, 18 treten bei der Förderung der Werkstücke 3 gleichzeitig in Aktion. Was die Gestaltung und Funktion der durch die Aktuatoren 17, 18 verschiebbaren Vorschubelemente 7, 8 betrifft, wird im Folgenden auf die Figuren 2 bis 5 verwiesen. Jedes Vorschubelement 7, 8 weist zwei Endstücke 14 auf, wobei die insgesamt vier Endstücke 14 identisch gestaltet sind. Im Fall des ersten Vorschubelementes 7 schließen die beiden Endstücke 14 an einen durchgehenden, geraden Stababschnitt 15 des Vorschubelementes 7 an. Im Fall des gekröpften Vorschubelementes 8 ist dagegen der Stababschnitt 15 durch einen gegenüber diesem versetzten Mittelabschnitt 16 unterbrochen. Der Mittelabschnitt 16 ist derart bemessen, dass ein ausreichender Verschiebeweg des zweiten Vorschubelementes 8 möglich ist.

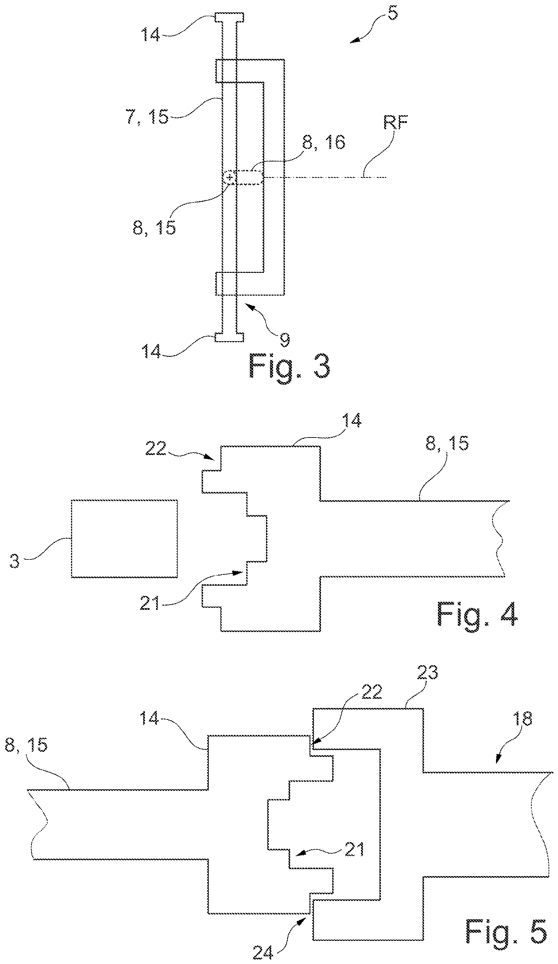

Die Zusammenwirkung eines Endstücks 14 mit einem Werkstück 3 ist in Figur 4 veranschaulicht. Das Endstück 14 weist eine Greifer-Kontur 21 auf, welche das Greifen des Werkstücks 3 ermöglicht. Die Endstücke 14 haben die Funktion von Vakuumgreifern. Optionale bewegliche Elemente, welche am Endstück 14 angeordnet sind und das Greifen des Werkstücks 3 ermöglichen oder unterstützen, sind nicht dargestellt.

Zusätzlich zur Greifer-Kontur 21 weist das Endstück 14 eine Anschlusskontur 22 auf, welche zur Zusammenwirkung mit dem Aktuator 17, 18 ausgebildet ist. Ein Endstück 23 des Aktuators 17, 18 weist zu diesem Zweck eine Anschlusskontur 24 auf, die auf die Anschlusskontur 22 des Endstücks 14 abgestimmt ist.

Beim Betrieb der Handhabungsvorrichtung 1 werden, wenn sich der Drehtisch 6 in der in Figur 1 dargestellten Position befindet, beide Aktuatoren 17, 18 gleichzeitig betätigt. Hierbei bewirkt der Aktuator 17, welcher das erste Vorschubelement 7 verschiebt, die Aufnahme eines Werkstücks 3. Gleichzeitig wird mit Hilfe des Aktuators 18, welcher das zweite Vorschubelement 8 verschiebt, ein Werkstück 3 an die Ablagestation 20 übergeben. Die Ablagestation 20 kann Teil einer Förder- und/oder Bearbeitungsvorrichtung sein, welche der Maschine 19 zuzurechnen ist. In jedem Fall ist die Orientierung des Werkstücks 3, welches an die Ablagestation 20 übergeben wird, um 90 Grad gegenüber der Orientierung der Werkstücke 3 auf dem Werkstückträger 2 gekippt. Nach der Übergabe des Werkstücks 3 an die Ablagestation 20 wird der Drehtisch 6 um 90 Grad gedreht, so dass das zuvor mit Hilfe des Aktuators 17 aufgenommene Werkstück 3, nun ebenfalls um 90 Grad gedreht, an die Ablagestation 20 übergeben werden kann. Die Anzahl der pro Zeiteinheit übergebenen Werkstücke 3 entspricht damit dem Doppelten der Taktfrequenz des Drehtisches 6.

### Bezugszeichenliste

- 1: Handhabungsvorrichtung
- 2: Werkstückträger, horizontal
- 3: Werkstück
- 4: Aufnahme im Werkstückträger
- 5: Werkstückfördereinrichtung
- 6: Drehtisch, vertikal
- 7: erstes Vorschubelement, gerade
- 8: zweites Vorschubelement, gekröpft
- 9: Linearführung für das erste Vorschubelement
- 10: Linearführung für das zweite Vorschubelement
- 11: Abstützring
- 12: Feder
- 13: Welle
- 14: Endstück des Vorschubelementes
- 15: Stababschnitt des Vorschubelementes
- 16: Mittelabschnitt des gekröpften Vorschubelementes
- 17: Aktuator
- 18: Aktuator
- 19: Maschine
- 20: Ablagestation
- 21: Greifer-Kontur des Endstücks
- 22: Anschluss-Kontur des Endstücks
- 23: Endstück des Aktuators
- 24: Anschluss-Kontur des Aktuators

- RF: Rotationsachse der Werkstückfördereinrichtung
- RW: Rotationsachse des Werkstückträgers

## Patentansprüche

1. Handhabungsvorrichtung zur Übergabe von Werkstücken, umfassend
- einen Werkstückträger (2), welcher zur Aufnahme einer Mehrzahl von Werkstücken ausgebildet ist, sowie
- eine rotierbare Werkstückfördereinrichtung (5), welche zur Weitergabe der Werkstücke an eine Ablagestation (20) ausgebildet ist,
wobei die Werkstückfördereinrichtung (5)
- dazu ausgebildet ist, Werkstücke in einer ersten Winkellage vom Werkstückträger (2) aufzunehmen und in einer zweiten Winkellage an die Ablagestation (20) weiterzugeben,
**dadurch gekennzeichnet, dass** die Werkstückfördereinrichtung (5)
- mindestens zwei Vorschubelemente (7, 8) umfasst, wobei
∘ jedes Vorschubelement (7, 8) linear verschiebbar ist und sich die Verschiebeachsen der Vorschubelemente (7, 8) in der Rotationsachse (RF) der Werkstückfördereinrichtung (5) kreuzen,
∘ mehrere Vorschubelemente (7, 8) gleichzeitig betätigbar sind,
∘ jedem Vorschubelement (7, 8) ein nicht mit der Werkstückfördereinrichtung (5) rotierender Linearaktuator (17, 18) zugeordnet ist,
∘ jedes Vorschubelement (7, 8) zwei gleichartige Endstücke (14) aufweist, wobei jedes Endstück (14) zur direkten Zusammenwirkung mit einem Werkstück ebenso wie zur direkten Zusammenwirkung einem Linearaktuator (17, 18) geeignet ist.

2. Handhabungsvorrichtung nach Anspruch 1, **dadurch gekennzeichnet, dass** die Rotationsachse (RF) der Werkstückfördereinrichtung (5) horizontal ausgerichtet ist.

3. Handhabungsvorrichtung nach Anspruch 1 oder 2, **dadurch gekennzeichnet, dass** die Werkstückfördereinrichtung (5) genau zwei, sich im 90°-Winkel kreuzende Vorschubelemente (7, 8) aufweist.

4. Handhabungsvorrichtung nach Anspruch 3, **dadurch gekennzeichnet, dass** eines der Vorschubelemente (7) eine gerade Form und das andere Vorschubelement (8) eine gekröpfte Form aufweist.

5. Handhabungsvorrichtung nach einem der Ansprüche 1 bis 4, **gekennzeichnet durch** mehrere, am Umfang der Werkstückfördereinrichtung (5) gleichförmig verteilte, zur Führung der Vorschubelemente (7, 8) vorgesehene Linearführungen (9, 10).

6. Handhabungsvorrichtung nach einem der Ansprüche 1 bis 5, **dadurch gekennzeichnet, dass** sämtliche Endstücke (14) der Vorschubelemente (7, 8) als pneumatische Greifer ausgebildet sind.

7. Handhabungsvorrichtung nach einem der Ansprüche 1 bis 6, **dadurch gekennzeichnet, dass** der Werkstückträger (2) um eine gegenüber Rotationsachse (RF) der Werkstückfördereinrichtung um 90° gekippte Rotationsachse (RW) drehbar ist.

8. Verfahren zur Übergabe von Werkstücken, mit folgenden Merkmalen:
- Bereitstellung einer als Rundschalttisch mit horizontaler Rotationsachse (RW) ausgebildeten Werkstückfördereinrichtung (5) mit zwei linear verschiebbaren, sich in der Rotationsachse (RW) kreuzenden Vorschubelementen (7, 8),
- Gleichzeitiges Abnehmen eines sich in einer ersten Winkellage befindlichen ersten Werkstücks von einem Werkstückträger (2) durch das erste Vorschubelement (7) und Weitergabe eines gleichartigen, sich in einer um 90° gekippten Winkellage befindlichen Werkstücks durch das zweite Vorschubelement (8) an eine Ablagestation (20),
- Weiterdrehung des Rundschalttisches (5) um 90° und Aufnahme eines weiteren Werkstücks vom Werkstückträger (2) durch das zweite Vorschubelement (8) bei gleichzeitiger Weitergabe des im vorherigen Schritt aufgenommenen ersten Werkstücks durch das erste Vorschubelement (7) an die Ablagestation (20).

9. Verfahren nach Anspruch 8, **dadurch gekennzeichnet, dass** die Verschiebung der Vorschubelemente (7, 8) durch außerhalb des Rundschalttisches (5) ortsfest angeordnete Aktuatoren (17, 18) erfolgt.

10. Verfahren nach Anspruch 9, **dadurch gekennzeichnet, dass** mehrere Aktuatoren (17, 18) gleichzeitig mit uneinheitlichem Hub betätigt werden.

## Claims

1. A handling device for transferring workpieces, comprising
- a workpiece carrier (2) designed to receive a plurality of workpieces, and
- a rotatable workpiece-conveying apparatus (5) designed to transfer the workpieces to a storage station (20),
wherein the workpiece-conveying apparatus (5)
- is designed to receive workpieces in a first angular position from the workpiece carrier (2) and to transfer them to the storage station (20) in a second angular position, **characterised in that** the workpiece-conveying apparatus (5)
- comprises at least two feed elements (7, 8), wherein
∘ each feed element (7, 8) is linearly displaceable and the displacement axes of the feed elements (7, 8) intersect in the axis of rotation (RF) of the workpiece-conveying apparatus (5),
∘ a plurality of feed elements (7, 8) can be actuated simultaneously,
∘ each feed element (7, 8) is assigned a linear actuator (17, 18) that does not rotate with the workpiece-conveying apparatus (5),
∘ each feed element (7, 8) has two similar end pieces (14), wherein each end piece (14) is suitable for direct interaction with a workpiece as well as for direct interaction with a linear actuator (17, 18).

2. The handling device according to claim 1, **characterised in that** the axis of rotation (RF) of the workpiece-conveying apparatus (5) is aligned horizontally.

3. The handling device according to claim 1 or 2, **characterised in that** the workpiece-conveying apparatus (5) has exactly two feed elements (7, 8) intersecting at a 90° angle.

4. The handling device according to claim 3, **characterised in that** one of the feed elements (7) has a straight shape and the other feed element (8) has a cranked shape.

5. The handling device according to any one of claims 1 to 4, **characterised by** a plurality of linear guides (9, 10) which are uniformly distributed on the circumference of the workpiece-conveying apparatus (5) and are intended to guide the feed elements (7, 8).

6. The handling device according to any one of claims 1 to 5, **characterised in that** all end pieces (14) of the feed elements (7, 8) are designed as pneumatic grippers.

7. The handling device according to any one of claims 1 to 6, **characterised in that** the workpiece carrier (2) can be rotated about an axis of rotation (RW) tilted by 90° relative to the axis of rotation (RF) of the workpiece-conveying apparatus.

8. A method for transferring workpieces, having the following features:
- providing a workpiece-conveying apparatus (5) designed as a rotary indexing table with a horizontal axis of rotation (RW) and two linearly displaceable feed elements (7, 8) intersecting in the axis of rotation (RW),
- simultaneously removing a first workpiece located in a first angular position from a workpiece carrier (2) by means of the first feed element (7) and transferring a similar workpiece in an angular position tilted by 90° via the second feed element (8) to a storage station (20),
- further rotating the rotary indexing table (5) by 90° and receiving a further workpiece from the workpiece carrier (2) by means of the second feed element (8) while simultaneously transferring the first workpiece received in the previous step to the storage station (20) via the first feed element (7).

9. The method according to claim 8, **characterised in that** the displacement of the feed elements (7, 8) takes place by means of actuators (17, 18) arranged in a stationary manner outside the rotary indexing table (5).

10. The method according to claim 9, **characterised in that** a plurality of actuators (17, 18) are actuated simultaneously with a non-uniform stroke.

## Revendications

1. Dispositif de manipulation pour transférer des pièces, comprenant
- un porte-pièces (2) conçu pour accueillir une pluralité de pièces et
- un dispositif de transport de pièces rotatif (5) qui est conçu pour acheminer les pièces vers un poste de stockage (20),
le dispositif de transport de pièces (5)
- étant conçu pour prélever des pièces dans une première position angulaire depuis le porte-pièces (2) et pour les acheminer dans une seconde position angulaire vers le poste de stockage (20), **caractérisé en ce que** le dispositif de transport de pièces (5)
- comprend au moins deux éléments d'avancement (7, 8),
∘ chaque élément d'avancement (7, 8) étant déplaçable linéairement et les axes de déplacement des éléments d'avancement (7, 8) se croisant dans l'axe de rotation (RF) du dispositif de transport de pièces (5),
∘ plusieurs éléments d'avancement (7, 8) pouvant être actionnés simultanément,
∘ à chaque élément d'avancement (7, 8) étant associé un actionneur linéaire (17, 18) qui ne tourne pas avec le dispositif de transport de pièces (5),
∘ chaque élément d'avancement (7, 8) comportant deux embouts similaires (14), chaque embout (14) étant adapté à une interaction directe avec une pièce ainsi qu'à une interaction directe avec un actionneur linéaire (17, 18).

2. Dispositif de manipulation selon la revendication 1, **caractérisé en ce que** l'axe de rotation (RF) du dispositif de transport de pièces (5) est orienté horizontalement.

3. Dispositif de manipulation selon la revendication 1 ou 2, **caractérisé en ce que** le dispositif de transport de pièces (5) présente exactement deux éléments d'avancement (7, 8) se croisant selon un angle de 90 °.

4. Dispositif de manipulation selon la revendication 3, **caractérisé en ce que** l'un des éléments d'avancement (7) présente une forme droite et l'autre élément d'avancement (8) présente une forme coudée.

5. Dispositif de manipulation selon l'une quelconque des revendications 1 à 4, **caractérisé par** plusieurs guidages linéaires (9, 10) qui sont répartis uniformément sur la circonférence du dispositif de transport de pièces (5) et sont destinés à guider les éléments d'avancement (7, 8).

6. Dispositif de manipulation selon l'une quelconque des revendications 1 à 5, **caractérisé en ce que** toutes les pièces d'extrémité (14) des éléments d'avancement (7, 8) sont conçues comme des pinces pneumatiques.

7. Dispositif de manipulation selon l'une quelconque des revendications 1 à 6, **caractérisé en ce que** le porte-pièces (2) peut tourner autour d'un axe de rotation (RW) incliné de 90 ° par rapport à l'axe de rotation (RF) du dispositif de transport de pièces.

8. Procédé pour transférer des pièces, présentant les caractéristiques suivantes :
- mise à disposition d'un dispositif de transport de pièces (5) conçu comme table d'indexation rotative avec un axe de rotation horizontal (RW) avec deux éléments d'avancement (7, 8) déplaçables linéairement se croisant dans l'axe de rotation (RW),
- retrait simultané d'une première pièce située dans une première position angulaire d'un porte-pièces (2) par le premier élément d'avancement (7) et acheminement d'une pièce similaire située dans une position angulaire inclinée de 90 ° au moyen du second élément d'avancement (8) vers un poste de stockage (20),
- poursuite de la rotation de la table d'indexation rotative (5) de 90 ° et prélèvement d'une autre pièce du porte-pièces (2) par le second élément d'avancement (8) tout en acheminant simultanément la première pièce prélevée à l'étape précédente par le premier élément d'avancement (7) vers le poste de stockage (20).

9. Procédé selon la revendication 8, **caractérisé en ce que** le déplacement des éléments d'avancement (7, 8) s'effectue au moyen d'actionneurs (17, 18) agencés de manière fixe à l'extérieur de la table d'indexation rotative (5).

10. Procédé selon la revendication 9, **caractérisé en ce que** plusieurs actionneurs (17, 18) sont actionnés simultanément avec une course inégale.
